# EUROPÄISCHE PATENTSCHRIFT

(11) **EP 3 634 880 B1**
(45) Veröffentlichungstag und Bekanntmachung des Hinweises auf die Patenterteilung: **21.09.2022**
(21) Anmeldenummer: 18728611.7
(22) Anmeldetag: 30.05.2018
(51) Int. Cl.: F17C 3/08, F28D 20/00

(54) **VERFAHREN ZUR WÄRMEDÄMMUNG EINES EVAKUIERBAREN BEHÄLTERS**
METHOD OF THERMAL INSULATING AN EVACUATABLE CONTAINER
PROCÉDÉ D'ISOLATION THERMIQUE POUR RÉCIPIENT À VIDE

(30) Priorität: 09.06.2017 DE 102017209782
(43) Veröffentlichungstag der Anmeldung: 15.04.2020
(73) Patentinhaber: Evonik Operations GmbH, 45128 Essen (DE); Stiebel Eltron GmbH & Co. KG, 37603 Holzminden (DE)
(72) Erfinder: GEISLER, Matthias, 37176 Nörten-Hardenberg (DE); HERR, Ann-Kathrin, 63450 Hanau (DE); ASBAHR, Hark-Oluf, 67161 Gönnheim (DE); SCHULTZ, Thorsten, 64739 Hassenroth (DE); SCHÄFFNER, Dirk, 63512 Hainburg (DE); MENZEL, Frank, 63456 Hanau (DE); MENG, Andreas, 34346 Hann. Münden (DE); MEIER, Dominik, 37603 Holzminden (DE)
(74) Vertreter: Evonik Patent Association
(86) Internationale Anmeldenummer: PCT/EP2018/064248
(87) Internationale Veröffentlichungsnummer: WO 2018/224377

(56) Entgegenhaltungen:
- WO-A1-2016/045777
- WO-A1-2017/097768
- DE-A1-102013 016 705
- DE-A1-102014 203 091
- US-A- 2 595 262
- US-A- 3 532 473
- US-A1- 2007 220 904
- US-A1- 2010 146 992
- US-A1- 2016 223 124

## Beschreibung

Die Erfindung betrifft ein Verfahren zur Wärmedämmung eines evakuierbaren Behälters.

In EP-A-645576 wird ein Verfahren zum Füllen und Komprimieren von isolierendem Pulver in Hohlwände eines kastenförmigen Körpers mit anschließender Evakuierung des gasförmigen Mediums offenbart, so dass das Pulver eine Vakuumisolierung in den Wänden bildet. Dabei wird das Pulver bei einem ersten Druck eingeblasen und bei einem zweiten Druck komprimiert.

In DE-A-102010040346 wird ein Verfahren zum Fertigen eines wärmeisolierenden Formkörpers offenbart, welches die Verfahrensschritte Bereitstellen einer Hohlform, Einfüllen eines schüttfähigen porösen Materials, beispielsweise ein Granulat eines offenporigen Kunststoff-Hartschaumes, eines Aerogels, eines Zeolithen oder einer Kieselsäure, in die Hohlform, Verfestigen des schüttfähigen porösen Materials in der Hohlform und Evakuieren und Verschließen der Hohlform umfasst.

In DE-A-102013016705 wird ein Verfahren zur Dämmung eines Warmwasserspeichers offenbart. Der Warmwasserspeicher umfasst hierbei einen Innenbehälter und einen Aussenbehälter, wobei zwischen dem Innenbehälter und dem Aussenbehälter ein Hohlraum zur Aufnahme einer Isolierschicht aus einem nicht näher bezeichneten, schüttfähigem, feinkörnigem Granulat vorgesehen ist. Das Verfahren enthält die Verfahrensschritte: Einfüllen des Granulats in den Hohlraum, Verdichten des Granulats in dem Hohlraum, Evakuieren und Verschließen des Hohlraums. Dabei kann das Verfahren so ausgeführt werden, dass zunächst das Granulat in den Hohlraum eingefüllt und verdichtet wird und sodann der Hohlraum evakuiert und verschlossen wird oder zunächst der Hohlraum evakuiert, sodann das Granulat eingefüllt und verdichtet wird und schließlich der Hohlraum verschlossen wird.

Im Stand der Technik werden sowohl Verfahren genannt, bei denen ein wärmedämmendes Material in einen Hohlraum eingebracht wird. Das Material kann dabei zunächst in den Hohlraum eingebracht werden und anschließend erfolgt das Evakuieren, oder aber der Hohlraum wird zunächst evakuiert und das wärmedämmende Material wird in den evakuierten Hohlraum eingebracht. In der Durchführung zeigen beide Verfahren Nachteile. Nachteile beispielsweise hinsichtlich der Befülldauer, des Absetzverhaltens oder des Austrags von bereits eingebrachtem wärmedämmendem Material.

Aufgabe der vorliegenden Erfindung war es daher, ein Verfahren mit einer kurzen Befülldauer bereitzustellen, bei dem der Austrag an wärmedämmendem Material minimiert wird.

Gegenstand der Erfindung ist ein Verfahren zur Wärmedämmung eines evakuierbaren Behälters, bevorzugt eines Warmwasserbehälters, umfassend einen Innenbehälter, einen Außenbehälter und einen zwischen dem Innenbehälter und dem Außenbehälter vorliegenden Hohlraum, wobei der Hohlraum vorgesehen ist ein wärmedämmendes, partikuläres Material aufzunehmen und zur Aufnahme des wärmedämmenden, partikulären Materiales die Schritte Evakuieren des Hohlraumes, Einfüllen des wärmedämmenden, partikulären Materiales in den Hohlraum, Verdichten des wärmedämmenden, partikulären Materiales im Hohlraum, Evakuieren des Hohlraums und Verschließen des Hohlraums durchgeführt werden,
wobei man
a) mittels einer Vakuumpumpe einen Druck im Hohlraum reduziert, und nach Erreichen eines ersten Wertes des Druckes die Verbindung zur Vakuumpumpe unterbricht,
b) nachfolgend eine Verbindung eines Vorratsbehälters des wärmedämmenden, partikulären Materiales mit einer im Bereich des Hohlraumes vorgesehenen Befüllöffnung herstellt,
c) den evakuierbaren Behälter in Bewegung versetzt, wobei das wärmedämmende, partikuläre Material in den Hohlraum gemäß a) fließt und sich der Druck durch die mit dem wärmedämmenden, partikulären Material eingebrachte Luft im Hohlraum erhöht,
d) die Befüllung bei einem zweiten Wert des Druckes beendet, indem die Verbindung vom Hohlraum zum Vorratsbehälter unterbrochen wird,
e) Schritt a) wiederholt, wobei die Leistung der Vakuumpumpe mit der der Hohlraum entlüftet wird, so geregelt wird, dass der zeitliche Verlauf des aus dem Hohlraum entweichenden Massestromes an Luft, die mit dem wärmedämmenden, partikulären Material eingebracht wird, ein Maximum aufweist,
f) nachfolgend die Schritte b)-e) bis zum gewünschten Befüllgrad wiederholt, und
g) als letzten Schritt den evakuierten Hohlraum verschließt.

Es kann vorteilhaft sein, ebenso den Vorratsbehälter in Bewegung zu versetzen. Diese Bewegung kann für den evakuierbaren Behälter wie für den Vorratsbehälter eine Vibration oder Rotation sein. Ebenso könnte man im Vorratsbehälter auch rühren, schräg drehen, aufgasen oder anderweitig fluidisieren.

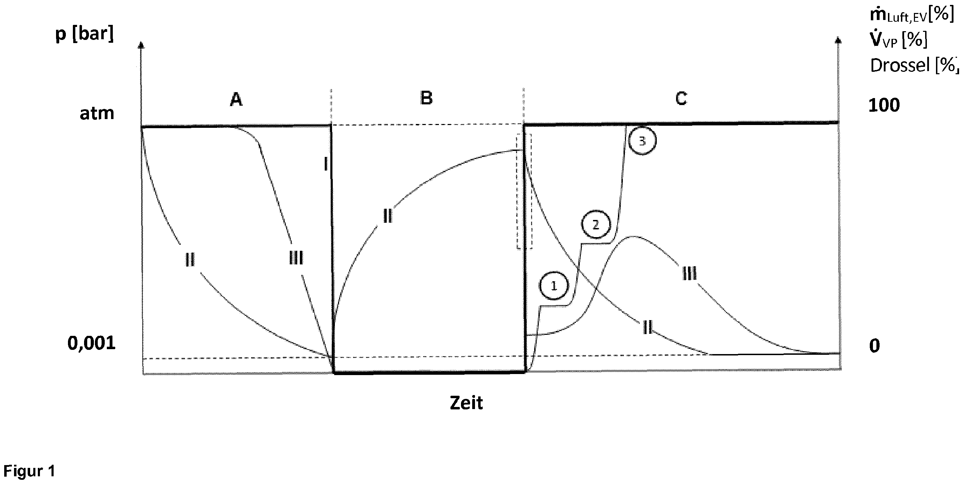

Figur 1 zeigt schematisch das erfindungsgemäße Verfahren bei Verwendung eines Drosselventiles im Evakuiervorgang vor Verschließen des Hohlraumes im Abschnitt C der Figur. Es gilt: [atm] = Atmosphärendruck; V̇_{VP} [%] = Saugvolumenstrom; ṁ_{Luft, EV} [%] = Massenstrom Luft; Drossel [%] = Öffnung Drosselventil
In Abschnitt A wird der Druck (II) im Hohlraum bei der Evakuierung des noch nicht mit dem wärmedämmenden, partikulären Material, befüllten Hohlraumes von Atmosphärendruck (atm) auf kleiner 100 mbar, insbesondere auf kleiner 20 mbar, insbesonder auf kleiner 5 mbar gezeigt. Zu Anfang herrscht ein hoher Massenstrom der Luft (III) , dieser fällt mit Abnahme des Druckes (II), jeweils abhängig vom Volumen des Hohlraumes und dem Saugvolumenstrom v̇_{VP} (I) der Vakuumpumpe.

Abschnitt B zeigt die Befüllung des Hohlraumes mit dem wärmedämmenden, partikulären Material, Hierzu wird eine Verbindung zwischen Vorratsbehälter und Hohlraum geöffnet, wodurch ein Druckausgleich erfolgt. In der Regel stellt sich ein geringer Unterdruck im Hohlraum ein. Der Unterdruck ist unter anderem abhängig von der Geometrie der Behälter, deren Anordnung untereinander und dem wärmedämmenden, partikulären Material. Der Größe des Unterdrucks (gestricheltes Rechteck) wird nicht bestimmt und ist für die Durchführung des erfindungsgemäßen Verfahrens nicht relevant.

Der Massenstrom der ausströmenden Luft ist Null.

Abschnitt C zeigt die Evakuierung des befüllten Ringspaltes. Die Evakuierung ist beispielhaft in drei Abschnitte gegliedert.

Abschnitt 1: Evakuierungsvorgang läuft, Ventilstellung der Drossel steigt auf 25%. Es wird ein geringer Massenstrom der Luft beobachtet.

Abschnitt 2: Evakuierungsvorgang läuft, Ventilstellung der Drossel steigt auf 50%. Es wird ein deutlich ansteigender Massenstrom der Luft beobachtet.

Abschnitt 3: Evakuierungsvorgang läuft, Ventilstellung der Drossel steigt auf 100%. Es wird beobachtet, dass der Massenstrom der Luft weiterhin steigt und ein Maximum erreicht. Evakuierungsvorgang läuft weiter bis der Ziel-Druck, beispielsweise kleiner 100 mbar, insbesondere kleiner 20 mbar, insbesonder kleiner 5 mbar, erreicht ist. Es wird beobachtet, dass der Massenstrom der Luft abnimmt.

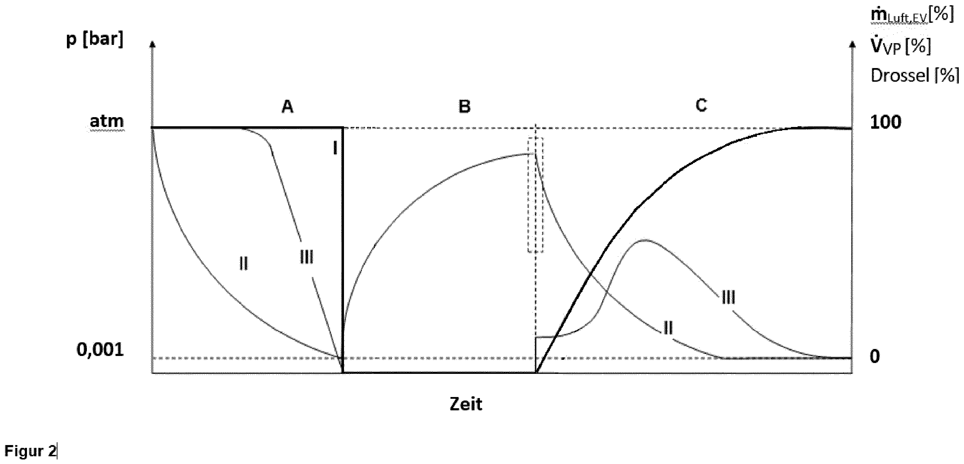

Figur 2 zeigt schematisch das erfindungsgemäße Verfahren bei Verwendung einer regelbaren Vakuumpumpe im Evakuiervorgang vor Verschließen des Hohlraumes im Abschnitt C der Figur. Es gilt: [atm] = Atmosphärendruck; V̇_{VP} [%] = Saugvolumenstrom; ṁ_{Luft, EV} [%] = Massenstrom Luft; Für die Abschnitte A und B gelten die für die Figur 1 gemachten Erläuterungen.

Abschnitt C zeigt die Evakuierung des befüllten Ringspaltes. Mit Abnahme der Druckstufe wird der Saugvolumenstrom V̇_{VP} der Vakuumpumpe erhöht. Massenstrom steigt zu Beginn, nimmt aber anschließend ab, da der Anteil an Luft im Hohlraum geringer wird.

Für den Befüllvorgang ist ein kontrollierter Massenstrom von Luft wichtig. So ist dieser ist zu Beginn der Evakuierung beispielsweise auf einen vorgegebenen niedrigen Wert begrenzt, insbesondere durch eine Leistungsbegrenzung der Vakuumpumpe oder ein Drosselventil, damit kein wärmedämmendes, partikuläres Material mitgerissen wird. In einem zweiten Schritt, wenn bereits ein bestimmter Wert des Vakuums erreicht ist, wird die Pumpenleistung erhöht oder die Drosselung weiter aufgehoben. Damit muss nicht zwangsläufig eine Massenstromerhöhung der Luft verbunden sein, da mit kleiner werdendem Vakuum die Pumpenleistung größer werden muss, damit gegen das Vakuum noch Luft aus dem Hohlraum abgesaugt werden kann.

Gemäß einem vorteilhaften Gedanken der Erfindung wird der Beginn der Evakuierung mit einem Startvolumenstom von Luft begonnen. Im Laufe der Evakuierung wird der Volumenstrom von Luft, ausgehend vom Startvolumenstrom, vorteilhaft weiter gesteigert, insbesondere wird der Volumenstrom von Luft um das etwa 2- bis 5- fache des Startvolumenstroms oder auch bis zum 10- oder zwanzigfachen des Startvolumenstroms gesteigert. Dabei nimmt der Massenstrom von Luft vorteilhaft ab.

Bei dem im erfindungsgemäßen Verfahren eingesetzten wärmedämmenden, partikulären Material handelt es sich bevorzugt um ein verdichtetes, Kieselsäure umfassendes Pulver mit einer Stampfdichte von 50-150 g/l. Die Stampfdichte kann nach ISO 697 / EN ISO 60; DIN 53468 bestimmt werden.

Ein solches Material weist eine niedrige Wärmeleitfähigkeit, gute Fließeigenschaften beim Befüllen auf, wobei der Austrag beim Evakuieren des Hohlraumes minimal oder gänzlich vernachlässigbar ist. Das verdichtete Pulver weist bevorzugt eine Wärmeleitfähigkeit von weniger als 5 mW/m·K bei einem Druck von 100 hPa oder weniger als 25 mW/m·K bei einem Druck von 1000 hPa auf. Das verdichtete Pulver unterscheidet sich von einem Granulat hinsichtlich seiner Stampfdichte und seines Fließverhaltens.

Bei der Kieselsäure handelt es sich bevorzugt um eine pyrogene Kieselsäure. Pyrogen hergestellte Kieselsäuren werden bevorzugt eingesetzt. Pyrogene Kieselsäuren liegen in der Regel in aggregierter Form oder wenigstens teilweise aggregiert vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Beschreibung "wenigstens teilweise aggregiert" soll klarstellen, dass neben Aggregaten auch isolierte Einzelpartikeln vorliegen können, wobei wenigstens 80% der hydrophobierten Siliciumdioxidpartikel in Form von Aggregaten vorliegen sollten. Eine solche Kieselsäure weist gute Werte bezüglich der Wärmedämmung als auch der mechanischen Stabilität des dreidimensionalen Netzwerkes auf. Das Verhältnis Aggregat zu isoliertem Einzelpartikel kann beispielsweise durch quantitative Auswertung von TEM-Aufnahmen (TEM = Transmissionselektronen-Mikroskopie) ermittelt werden. Die Siliciumdioxidpartikel sind amorph.

Pyrogen umfasst die Herstellung der Kieselsäure mittels Flammenhydrolyse und

Flammenoxidation. Dabei werden oxidierbare und/oder hydrolysierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliciumtetrachlorid. Die so erhaltene hydrophile Kieselsäure ist weitestgehend porenfrei und weist auf ihrer Oberfläche freie Hydroxylgruppen auf. Die BET-Oberfläche pyrogener Kieselsäure beträgt in der Regel 30 - 500 m²/g. Für das erfindungsgemäße Verfahren ist insbesondere eine BET-Oberfläche von wenigstens 150 m²/g bevorzugt.

Die im erfindungsgemäßen Verfahren eingesetzte Kieselsäure kann eine hydrophile Kieselsäure, eine hydrophobierte Kieselsäure oder mindestens eine hydrophile und mindestens eine hydrophobe Kieselsäure umfassen.

Als besonders günstig hat es sich erwiesen, eine hydrophobierte Kieselsäure einzusetzen. Diese werden aus der Reaktion von hydrophilen Kieselsäuren mit einem Hydrophobierungsmittel erhalten. Dabei werden die an der Oberfläche der hydrophilen Kieselsäure vorliegenden Hydroxylgruppen teilweise oder vollständig umgesetzt. Der Grad der Hydrophobierung kann durch die Methanolbenetzbarkeit bestimmt werden.

So sollte die Kieselsäure eine Methanolbenetzbarkeit von wenigstens 20 Vol.-% Methanol, bevorzugt 20 - 80 Vol.-% Methanol, aufweisen. Hydrophobe Kieselsäuren lassen sich durch Zusatz von Methanol wasserbenetzbar machen. Dies erfolgt durch Methanol/Wasser - Gemische unterschiedlicher Konzentration. Es lassen sich so Aussagen über den Hydrophobierungsgrad der Kieselsäuren treffen.

Die hydrophobierte Kieselsäure kann bevorzugt durch Reaktion einer hydrophilen Kieselsäure mit einem Organosilan aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH3, -C2H5; X= -Cl, -Br; -OCH₃, -OC₂H₅,-OC₃H₈, Y= NH, O erhalten werden.

Durch ihre hydrophoben Eigenschaften wird sichergestellt, dass kein oder nur geringe Mengen anhaftenden Wassers in den zu befüllenden Hohlraum eingebracht wird. Anhaftendes Wasser kann zu einer unerwünschten Reduzierung des Vakuums und damit zu einer erhöhten Wärmeleitfähigkeit, führen. Daher kann es vorteilhaft sein, das wärmedämmende, partikuläre Material in möglichst wasserfreiem Zustand einzubringen. Dies kann zwar durch Trocknungsverfahren oder nachträgliche Reduzierung des Druckes erreicht werden, was aber den Befüllvorgang verlangsamen kann.

Bevorzugt wird das verdichtete Pulver als Gemisch einer Kieselsäure und eines IR-Trübungsmittels eingesetzt. Besonders bevorzugt ist ein Anteil von 60-90 Gew-.% einer Kieselsäure und 10-40 Gew.-% eines IR-Trübungsmittels. Geeignete IR-Trübungsmittel sind Titanoxide, Zirkonoxide, Ilmenite, Eisentitanate, Eisenoxide, Zirkonsilikate, Siliciumcarbid, Manganoxide, Graphite und/oder Ruße. Die Partikelgröße der Trübungsmittel liegt in der Regel zwischen 0,1 und 25 µm. Bei Siliciumcarbid und Titanoxiden ist der mittlere Partikeldurchmesser d50 bevorzugt 1 bis 10 µm, besonders bevorzugt 2 bis 8 µm.

## Patentansprüche

1. Verfahren zur Wärmedämmung eines evakuierbaren Behälters, umfassend einen Innenbehälter, einen Außenbehälter und einen zwischen dem Innenbehälter und dem Außenbehälter vorliegenden Hohlraum, wobei der Hohlraum vorgesehen ist ein wärmedämmendes, partikuläres Material aufzunehmen und zur Aufnahme des wärmedämmenden, partikulären Materiales die Schritte Evakuieren des Hohlraumes, Einfüllen des wärmedämmenden, partikulären Materiales in den Hohlraum, Verdichten des wärmedämmenden, partikulären Materiales im Hohlraum, Evakuieren des Hohlraums und Verschließen des Hohlraums durchgeführt werden,
wobei man
a) mittels einer Vakuumpumpe einen Druck im Hohlraum reduziert, und nach Erreichen eines ersten Wertes des Druckes die Verbindung zur Vakuumpumpe unterbricht,
b) nachfolgend eine Verbindung eines Vorratsbehälters des wärmedämmenden, partikulären Materiales mit einer im Bereich des Hohlraumes vorgesehenen Befüllöffnung herstellt,
c) den evakuierbaren Behälter in Bewegung versetzt, wobei das wärmedämmende, partikuläre Material in den Hohlraum gemäß a) fließt und sich der Druck durch die mit dem wärmedämmenden, partikulären Material eingebrachte Luft im Hohlraum erhöht,
d) die Befüllung bei einem zweiten Wert des Druckes beendet, indem die Verbindung vom Hohlraum zum Vorratsbehälter unterbrochen wird,
e) Schritt a) wiederholt, wobei die Leistung der Vakuumpumpe mit der der Hohlraum entlüftet wird, so geregelt wird, dass der zeitliche Verlauf des aus dem Hohlraum entweichenden Massestromes an Luft, die mit dem wärmedämmenden, partikulären Material eingebracht wird, ein Maximum aufweist,
f) nachfolgend die Schritte b)-e) bis zum gewünschten Befüllgrad wiederholt, und
g) als letzten Schritt den evakuierten Hohlraum verschließt.

2. Verfahren nach Anspruch 1, **dadurch gekennzeichnet, dass**
man den Vorratsbehälter in Bewegung versetzt.

3. Verfahren nach Anspruch 1 oder 2, **dadurch gekennzeichnet, dass**
die Bewegung eine Vibration oder Rotation darstellt.

4. Verfahren nach den Ansprüchen 1 bis 3, **dadurch gekennzeichnet,**
**dass** das wärmedämmende, partikuläre Material ein verdichtetes, Kieselsäure umfassendes Pulver mit einer Stampfdichte von 50-150 g/l ist.

5. Verfahren nach den Anspruch 4, **dadurch gekennzeichnet, dass**
die Kieselsäure eine hydrophobierte Kieselsäure ist.

6. Verfahren nach den Anspruch 4, **dadurch gekennzeichnet, dass**
die Kieselsäure eine hydrophile Kieselsäure ist.

7. Verfahren nach den Anspruch 4, **dadurch gekennzeichnet, dass**
die Kieselsäure mindestens eine hydrophile und mindestens eine hydrophobe Kieselsäure umfasst.

8. Verfahren nach einem der Ansprüche 4 bis 7, **dadurch gekennzeichnet, dass**
das verdichtete Pulver ein Gemisch einer Kieselsäure und eines IR-Trübungsmittels ist.

9. Verfahren nach Anspruch 8, **dadurch gekennzeichnet, dass**
der Anteil der Kieselsäure 60-90 Gew-.% und des IR-Trübungsmittels 10-40 Gew.-% beträgt.

## Claims

1. Method for thermal insulation of an evacuable container comprising an inner container, an outer container and a cavity disposed between the inner container and the outer container, wherein the cavity is provided to receive a thermally insulating particulate material and for receiving the thermally insulating particulate material the steps of evacuating the cavity, filling the thermally insulating particulate material into the cavity, compressing the thermally insulating particulate material in the cavity, evacuating the cavity and sealing the cavity are performed,
wherein said method comprises
a) using a vacuum pump to reduce a pressure in the cavity and after achieving a first value of the pressure interrupting the connection to the vacuum pump,
b) subsequently making a connection from a reservoir container of the thermally insulating particulate material to a filling opening provided in the region of the cavity,
c) setting the evacuable container into motion, wherein the thermally insulating particulate material flows into the cavity according to a) and the pressure in the cavity increases due to the air introduced with the thermally insulating particulate material,
d) terminating the filling at a second value of the pressure by interrupting the connection from the cavity to the reservoir container,
e) repeating step a), wherein the output of the vacuum pump with which the cavity is deaerated is controlled such that the profile over time of the mass flow exiting from the cavity of air introduced with the thermally insulating particulate material is at a maximum,
f) subsequently repeating steps b)-e) up to the desired degree of filling and
g) as the final step sealing the evacuated cavity.

2. Method according to Claim 1, **characterized in that**
the reservoir container is set into motion.

3. Method according to Claim 1 or 2, **characterized in that**
the motion is a vibration or rotation.

4. Method according to Claims 1 to 3, **characterized in that**
the thermally insulating particulate material is a compressed silica-comprising powder having a tamped density of 50-150 g/l.

5. Method according to Claim 4, **characterized in that**
the silica is a hydrophobized silica.

6. Method according to Claim 4, **characterized in that**
the silica is a hydrophilic silica.

7. Method according to Claim 4, **characterized in that**
the silica comprises at least one hydrophilic silica and at least one hydrophobic silica.

8. Method according to any of Claims 4 to 7, **characterized in that**
the compressed powder is a mixture of a silica and an IR opacifier.

9. Method according to Claim 8, **characterized in that**
the proportion of the silica is 60-90% by weight and of the IR opacifier 10-40% by weight.

## Revendications

1. Procédé d'isolation thermique d'un récipient pouvant être mis sous vide, comprenant un récipient interne, un récipient externe et une cavité présente entre le récipient interne et le récipient externe, la cavité étant conçue pour accueillir un matériau particulaire thermiquement isolant et, pour l'accueil du matériau particulaire thermiquement isolant, les étapes de mise sous vide de la cavité, de remplissage de la cavité avec le matériau particulaire thermiquement isolant, de compactage du matériau particulaire thermiquement isolant dans la cavité, de mise sous vide de la cavité et de fermeture de la cavité étant réalisées,
dans lequel
a) on réduit une pression dans la cavité au moyen d'une pompe à vide, et après avoir atteint une première valeur de la pression, on interrompt la liaison à la pompe à vide,
b) ensuite, on crée une liaison d'un réservoir du matériau particulaire thermiquement isolant à un orifice de remplissage prévu dans la région de la cavité,
c) on met en mouvement le récipient pouvant être mis sous vide, le matériau particulaire thermiquement isolant s'écoulant dans la cavité selon a) et la pression s'élevant dans la cavité en raison de l'air apporté avec le matériau particulaire thermiquement isolant,
d) on stoppe le remplissage à une deuxième valeur de la pression, en interrompant la liaison de la cavité au réservoir,
e) on répète l'étape a), la puissance de la pompe à vide avec laquelle la cavité est purgée étant réglée de telle manière que l'évolution dans le temps du flux de masse d'air sortant de la cavité qui est apporté avec le matériau particulaire thermiquement isolant, présente un maximum,
f) ensuite, on répète les étapes b) à e) jusqu'au degré de remplissage souhaité, et
g) en tant que dernière étape, on ferme la cavité mise sous vide.

2. Procédé selon la revendication 1, **caractérisé en ce qu'**on met en mouvement le réservoir.

3. Procédé selon la revendication 1 ou 2, **caractérisé en ce que** le mouvement est une vibration ou une rotation.

4. Procédé selon les revendications 1 à 3, **caractérisé en ce que** le matériau particulaire thermiquement isolant est une poudre compactée comprenant de l'acide silicique, dotée d'une densité tassée de 50 à 150 g/l.

5. Procédé selon la revendication 4, **caractérisé en ce que** l'acide silicique est un acide silicique hydrophobisé.

6. Procédé selon la revendication 4, **caractérisé en ce que** l'acide silicique est un acide silicique hydrophile.

7. Procédé selon la revendication 4, **caractérisé en ce que** l'acide silicique comprend au moins un acide silicique hydrophile et au moins un acide silicique hydrophobe.

8. Procédé selon l'une quelconque des revendications 4 à 7, **caractérisé en ce que** la poudre compactée est un mélange d'un acide silicique et d'un agent opacifiant aux IR.

9. Procédé selon la revendication 8, **caractérisé en ce que** la proportion d'acide silicique est de 60 à 90 % en poids et la proportion de l'agent opacifiant aux IR est de 10 à 40 % en poids.
